Europäisches Patentamt

European Patent Office

Office européen des brevets

(11) Publication number: **0 456 179 B1**

## EUROPEAN PATENT SPECIFICATION

(45) Date of publication of patent specification: **02.08.95**

(51) Int. Cl.⁶: **C08L 51/06**, C08L 25/02, //(C08L51/06,25:02),(C08L25/02, 51:06)

(21) Application number: **91107388.0**

(22) Date of filing: **07.05.91**

The file contains technical information submitted after the application was filed and not included in this specification

(54) **A thermoplastic resin composition.**

(30) Priority: **11.05.90 JP 121885/90**
**25.06.90 JP 166339/90**

(43) Date of publication of application:
**13.11.91 Bulletin 91/46**

(45) Publication of the grant of the patent:
**02.08.95 Bulletin 95/31**

(84) Designated Contracting States:
**DE FR GB**

(56) References cited:
**US-A- 4 528 329**

**DATABASE WPIL, accession no. 87-012623, Derwent Publications Ltd, London, GB; & JP-A-61 272 239 (SHOWA DENKI K.K.) 02-12-1986**

**DATABASE WPIL, accession no. 87-338570, Derwent Publications Ltd, London, GB; & JP-A-62 243 633 (MITSUBISHI PETROCHEM. K.K.) 24-10-1987**

**STN-CA 107(6):41058w**

(73) Proprietor: **CHISSO CORPORATION**
**6-32, Nakanoshima 3-chome**
**Kitaku**
**Osaka (JP)**

(72) Inventor: **Saito, Kouichi**
**17, Tatsumidaihigashi 2-chome**
**Ichiharashi,**
**Chibaken (JP)**
Inventor: **Yonaiyama, Rikio**
**15-5, Shiinokidai 1-chome**
**Ichiharashi,**
**Chibaken (JP)**
Inventor: **Yoshimitsu, Minoru**
**1963-4, Yawatakaigandohri**
**Ichiharashi,**
**Chibaken (JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

1. Field of the Invention

This invention relates to a thermoplastic resin composition for molding having a superior strength at welded part, stiffness, dimensional stability and chemical resistance, wherein said thermoplastic resin composition comprises a fibrous filler.

2. Description of the Related Art

Since polyolefins are superior in the molding processability and chemical resistance and cheap, they have been used as general-purpose resins in many fields. However, polyolefins have drawbacks that they are insufficient in the stiffness, and particularly their stiffness in a high temperature range is notably reduced and also their dimensional stability and coating properties are inferior; hence it is the present status that their use applications have been restricted.

On the other hand, aromatic vinyl polymers represented by polystyrene have specific features that they are superior in the stiffness and dimensional stability and particularly reduction in the stiffness within a high temperature range is small so that they have been broadly utilized, but they have a serious drawback that they are inferior in the chemical resistance.

In view of the foregoing, in order to overcome the respective drawbacks of polyolefins and aromatic vinyl polymers, a process of blending the both may be considered, but there is a problem that the compatibility of the both with each other is far inferior.

As a process for improving the compatibility of polyolefins with polystyrene, a process has been proposed wherein a high-molecular reaction product of a modified polyolefin obtained by graft-reacting a polyolefin with an unsaturated carboxylic acid or its anhydride, with an epoxy group-containing polar polymer such as an epoxy group-containing acrylic copolymer, an epoxy group-containing styrene copolymer, etc. is used as a compatibility-improving agent (Japanese patent application laid-open No. Sho 58-198529). According to this process, it is possible to obtain a composition having an improved compatibility, a superior dispersibility and no lamellar peel. However, the composition obtained according to this process has a sufficient strength at non-welded part, but the strength at welded part is difficult to be regarded as a strength on a satisfactory level. Further, when the composition is allowed to stand in molten state for a long time, dispersed particles agglomerate into larger particles, and in the case of molding of small test piece, etc., no particular problem is raised, but in the case of a large size molded product, a problem that nonuniform parts occur has been raised.

Further, as to the function and effect of the above high-molecular reaction product itself, obtained from a modified polyolefin and an epoxy group-containing polar polymer (in the above Japanese patent application laid-open No. Sho 58-198529), the use applications of the above reaction product are directed to adhesives or compatibility-improving agents; hence the product is different in the object from the composition of the present invention, and the above reference has no disclosure as to usefulness for molded products. Further, as to the weight average molecular weight and the functional group content of the modified polyolefin, the weight average molecular weight and the epoxy group content of the epoxy group-containing polar polymer, the kind of the polar polymer, etc., disclosed in the reference, the ranges of the values of these properties are as very broad as for example, the weight average molecular weight of the modified polyolefin: 5,000 [the melt flow rate at 230°C, 2.16 Kg load (hereinafter abbreviated merely to MFR): 1,000 g/10 min or more (unmeasurable)] to 1,000,000 [MFR: 0.1g/10 min or less (unmeasurable)]; and the weight average molecular weight of the epoxy group-containing polar polymer: 2,000 [MFR: 1,000 g/10 min or more (unmeasurable)] to 1,000,000 [MFR: 0.1 g/10 min or less (unmeasurable)]. Thus, the ranges within which useful molded products are obtained are substantially not specified.

Further, Japanese patent application laid-open No. Sho 63-122757 proposes, as an agent for improving the compatibility between polyphenylene ether resins and polyolefins, a combination of epoxy group-containing polystyrene resins with modified polyolefins obtained by graft-reacting polyolefins with unsaturated carboxylic acids or anhydrides thereof. Furthermore, Japanese patent application laid-open No. Sho 64-75560 also proposes a similar combination as an agent for improving the compatibility between polycarbonate resins and polyolefins. Even when these processes are employed, it is possible to obtain a resin composition having a good dispersibility and superior mechanical strength and chemical resistance, but in either of these compositions, too, the epoxy group content, the content of the functional group of unsaturated carboxylic acids or anhydrides thereof and the molecular weights (or MFRs) of these combinations are substantially not specified, and the importance of specifying the values of these properties are not suggested therein. In addition, we have examined these compositions and as a result, have found that the same results as in the above Japanese patent application laid-open No. Sho 58-198529 are obtained, that is, a problem has been raised that the strength at non-welded part is sufficient, but the strength at welded part is difficult to be regarded as that on a satisfactory level, and when the composition is allowed to stand in molten state for a long time, the dispersed particles agglomerate into larger particles.

Further, as to the combination itself of epoxy group-containing polystyrene resins with modified polyolefins, the epoxy group content, the content of the functional group of unsaturated carboxylic acids or anhydrides thereof and the molecular weight (or MFR) of the respective components are not only substantially not specified, but also the usefulness of the resulting molded product is not disclosed at all.

Database WPIL, Acc. no. 87 - 012623 discloses a thermoplastic resin composition consisting of (A) 5-95 wt.% of a modified thermoplastic resin composition obtained by reacting unsaturated carboxylic acid or its anhydride with a mixture of polyolefin and vinyl polymer and (B) 95-5 wt.% of an epoxy-group-containing vinyl polymer. The component (A) contains 1-100 grafted carboxyl groups or its anhydride. The component (B) contains 1-100 epoxy groups in one molecule.

Database WPIL, Acc. no. 87-338570 discloses a polyolefin resin composition containing (A) 40 to 90 wt.% of polyolefin, (B) 5 to 30 wt.% of styrene-maleic anhydride copolymer and (C) 5 to 50 wt.% of glass fibres.

On the other hand, fiber-reinforced polyolefins with a fibrous filler have been considerably improved in the mechanical strength, stiffness and heat-resistance as compared with conventional polyolefins; hence they have been suitably used as an engineering plastic for various industrial parts. However, such fiber-reinforced polyolefins have a serious drawback that a notable warpage deformation occurs therein depending upon the shape of the resulting molded product to bring about an inferior dimensional stability; thus it is the present status that their use applications have been limited.

In order to overcome the warpage deformation of the fiber-reinforced polyolefins, for example a process of blending a plate-form filler such as mica, talc, etc. together with the fibrous filler has been proposed (Japanese patent publication No. Sho 49-20930 and Japanese patent application laid-open No. Sho 59-184247). According to the process, it is possible to overcome the warpage deformation at the time of molding to a large extent, but on the other hand, it is impossible to avoid reduction in the strength at the welded part, and also there occurs a damage that the hue of the resulting product becomes notably inferior depending upon the kind of the plate-form filler.

The reduction in the strength at the welded part raises a very serious problem for example in the case of screwing molded products. Namely, the screwing is very often carried out usually by self-tapping at the boss part of molded products, and since a welded line is formed at the boss part, if the strength at the welded part is low, the part is broken at the time of self-tapping. Further, in general, a higher aspect ratio of the plate-form filler is more effective for inhibiting the warpage deformation, whereas there is a tendency that the strength at the welded part notably lowers; thus, in order to obtain a composition having the warpage inhibited and having a superior strength at the welded part, the above process has a limitation of itself.

As another process, a process of blending a rubbery component together with a fibrous filler has been proposed (Japanese patent publication No. Sho 59-2294). According to this process, it is also possible to inhibit the warpage deformation. However, even according to this process, reduction in the strength at the welded part cannot be avoided, and further, reduction in the stiffness and heat resistance due to blending of the rubbery component cannot be avoided.

A process of blending both the plate-form filler and the rubbery component together with the fibrous filler has also been proposed (Japanese patent application laid-open No. Sho 51-136736), and according to this process, it is possible to obtain a composition having the warpage deformation inhibited and having well-balanced stiffness and high-impact properties. However, even according to this process, reduction in the strength at the welded part cannot be still avoided.

On the other hand, aromatic vinyl polymers represented by polystyrene have been known as resins having a superior dimensional stability and even when they are reinforced by fibrous fillers such as glass fibers, etc., damages of the warpage deformation, etc. do not occur, but since the resins are non-crystalline resins, there are drawbacks that as to the reinforcing effect in the aspect of strength, it is impossible to obtain a large value as in crystalline resins such as polyolefins and further, the resins are inferior in the chemical resistance. In view of the foregoing, in order to overcome the respective drawbacks of the fiber-reinforced polyolefins and the fiber-reinforced aromatic polymers, a composition consisting of a polyolefin, an aromatic vinyl polymer and a fibrous filler may be considered. However, since polyolefins and aromatic vinyl polymers are intrinsically poor in the compatibility with each other, reduction in the mechanical strength cannot be avoided also in this case.

As a process of obtaining a composition having overcome the compatibility of polyolefins with aromatic vinyl polymers, having superior strength and having the warpage inhibited, a process of blending a polyolefin, a fibrous filler and a styrene-maleic anhydride copolymer has been proposed (Japanese patent application laid-open No. Sho 62-243633). Thus, we have examined the composition obtained according to this process. As a result, it has been found that the contents of the process are directed to improvement in the compatibility between the polyolefin component and the aromatic vinyl polymer component by the medium of the fibrous filler, but improvement in the compatibility between both the resins has been clearly observed to have a limitation, and the mechanical strength, particularly the strength at the welded part, has been unsatisfactory.

As described above, it is the present status that a thermoplastic resin composition for molding having a sufficient compatibility between polyolefins and aromatic vinyl polymers, being composed of finely dispersed particles which do not agglomerate into larger particles and having superior strength at welded part, stiffness, dimensional stability and chemical resistance has been desired as a material for various industrial parts, but a fully satisfactory composition has not yet been obtained.

SUMMARY OF THE INVENTION

Thus the object of the present invention is to provide a thermoplastic resin composition for molding, having overcome the drawbacks of the above-mentioned prior art and having an improved compatibility of polyolefins with aromatic vinyl polymers, having finely dispersed particles without agglomeration into larger particles and having superior strength at welded part, stiffness, dimensional stability and chemical resistance.

The present inventors have made extensive research, and as a result, have found that a composition having a modified polyolefin obtained by graft-reacting a polyolefin with an unsaturated carboxylic acid or its anhydride, and having a specified content of functional group and a specified MFR, blended with an aromatic vinyl polymer having a specified content of epoxy group and a specified MFR, further having a fibrous filler blended in a definite proportion are very suitable for molding processing in the aspect of melt-viscosity, and are effective for achieving the object of the present invention.

The present invention resides in a thermoplastic resin composition obtainable by melt-kneading the following components (A) in 20 to 95% by weight and (B) in 80 to 5% by weight and a fibrous filler in 5 to 150 parts by weight based upon 100 parts by weight of the total weight of said component (A) and said component(B),

(A) a modified polyolefin obtained by graft-reacting a polyolefin with an unsaturated carboxylic acid or its anhydride, alone or a mixture of said modified polyolefin with a polyolefin, the content of the functional group of said unsaturated carboxylic acid or its anhydride being 3 to 1,000 mmol/Kg and the melt flow rate (MFR) thereof at 230°C and under a load of 2.16 Kg being 1 to 200 g/10 min, and

(B) an epoxy group-containing aromatic vinyl polymer having an epoxy group content of 50 to 1,000 mmol/Kg, alone or a mixture of said epoxy group-containing aromatic vinyl polymer with an aromatic vinyl polymer containing no epoxy group, the content of epoxy group as a whole of said component (B) being 50 to 1,000 mmol/Kg and the melt flow rate (MFR) thereof at 230°C and under a load of 2.16 Kg being 15 to 200 g/10 min.

DETAILED DESCRIPTION OF PREFERRED EMBODIMENTS

In the present invention, the modified polyolefin used as the component (A) is suitably obtained by graft-reacting a polyolefin with an unsaturated carboxylic acid or its anhydride.

As the above polyolefin, low density polyethylene, linear low density polyethylene, high density polyethylene, polypropylene, polybutene-1, polypentene-1, polyhexene-1, poly-4-methylpentene-1 or copolymers obtained from a plurality of olefin monomers selected from ethylene, propylene, butene-1, pentene-1, hexene-1, 4-methylpentene-1, etc. are exemplified. Among these, polypropylene and crystalline copolymers of propylene with ethylene or other olefins, composed mainly of propylene are preferred.

Further, as the unsaturated carboxylic acid or its anhydride graft-reacted with the polyolefin, acrylic acid, methacrylic acid, maleic acid, fumaric acid, itaconic acid, citraconic acid, maleic anhydride, itaconic anhydride, citraconic anhydride, cis-4-cyclohexene-1,2-dicarboxylic acid, cis-4-cyclohexene-1,2-dicarboxylic anhydride, endo-bicyclo-(2,2,1)-5-heptene-2,3-dicarboxylic acid, endo-bicyclo-(2,2,1)-5-heptene-2,3-dicarboxylic anhydride, etc. are exemplified. Among these, maleic anhydride is particularly preferable. These

4

unsaturated carboxylic acids or their anhydrides may be used alone or in admixture of two or more kinds.

The preparation of the modified polyolefin may be carried out by way of various known processes. For example, a process of reacting a polyolefin with an unsaturated carboxylic acid or its anhydride in the presence or absence of a reaction initiator and in molten state by means of an extruder, Bambury mixer or the like, a process of reacting the both in the presence of a solvent and in solution state, etc. may be exemplified.

The component (A) may be the modified polyolefin, alone or a mixture thereof with an unmodified polyolefin.

In the case of the above mixture, as the unmodified polyolefin mixed with the modified polyolefin, polyolefins used for preparing the modified polyolefin are broadly applicable. Among these, polypropylene or crystalline copolymers of propylene with ethylene or other olefins, composed mainly of propylene are preferable.

The mixing manner of the modified polyolefin with the unmodified polyolefin has no particular limitation as far as it is possible to mix the both. Examples of the manner are a process of melt-kneading the both in advance, a process of blending the respective polyolefins when the composition of the present invention is prepared, and the like processes.

The component (A) in the present invention is necessary to have a content of the functional group of an unsaturated carboxylic acid or its anhydride of 3 to 1,000 mmol/Kg, preferably 5 to 900 mmol/Kg and an MFR of 1 to 200 g/10 min, preferably 3 to 180 g/10 min. If the content of the functional group is less than 3 mmol/Kg, no composition having a good strength at welded part is obtained, while if it exceeds 1,000 mmol/Kg, the resulting composition forms a gelling substance to reduce its commodity value. Further, if the MFR is outside the range of 1 to 200 g/10 min, no composition having a good strength at welded part is obtained with decrease of the compatibility.

The above-mentioned content of the functional group (mmol/Kg) may be measured by subjecting to infrared spectrophotometric analysis, a modified polyolefin having removed ungrafted unsaturated carboxylic acid or its anhydride monomer and the homopolymers thereof. By means of the respective infrared peaks characteristic of the unsaturated carboxylic acid or its anhydride, and using calibration lines prepared in advance, the grafted quantity (wt.%) is determined, followed by dividing this grafted quantity by the molecular weight of the grafted monomer, to calculate the content of the functional group (mmol/Kg). The removal of the ungrafted unsaturated carboxylic acid or its anhydride monomer and the homopolymers thereof may be carried out by once completely dissolving pellets of the modified polyolefin in a solvent such as xylene, etc., followed by feeding the resulting solution in a solvent such as acetone which is a poor solvent for the polyolefins but a good solvent for the unsaturated carboxylic acid or its anhydride monomer used for the grafting and the homopolymers, precipitating, filtering and drying.

Next, as the epoxy group-containing aromatic vinyl polymer used as the component (B) in the present invention, copolymers of an epoxy group-containing unsaturated monomer with an aromatic vinyl monomer or copolymers of these with an additional other unsaturated monomer may be broadly exemplified.

Examples of the above epoxy group-containing unsaturated monomer are glycidyl acrylate, glycidyl methacrylate, allyl glycidyl ether, 2-methylallyl glycidyl ether, etc. Among these, glycidyl methacrylate is particularly suitable.

Further, examples of the aromatic vinyl monomer are styrene, $\alpha$-methylstyrene, p-methylstyrene, 2,4-dimethylstyrene, chlorostyrene, vinyltoluene, etc. Among these, styrene is particularly preferable.

Examples of the other unsaturated monomer are cyanated vinyl monomers such as acrylonitrile, methacrylonitrile, etc. or acrylic or methacrylic ester monomers such as methyl acrylate, methyl methacrylate, ethyl acrylate, ethyl methacrylate, etc.

Concrete examples of the component (B) i.e. the epoxy group-containing aromatic vinyl polymer are styrene-glycidylmethacrylate copolymer, styrene-acrylonitrile-glycidyl methacrylate copolymer, etc.

The component (B) may be an epoxy group-containing aromatic vinyl polymer, alone or a mixture thereof with an aromatic vinyl polymer containing no epoxy group.

In the case of the mixture, as the aromatic vinyl polymer containing no epoxy group, not only an aromatic vinyl monomer homopolymer or copolymers of an aromatic vinyl monomer with another unsaturated monomer, but also materials obtained by reinforcing these with rubber are suitable.

Concrete examples thereof are polystyrene, poly-$\alpha$-methylstyrene, high-impact polystyrene, styrene-acrylonitrile copolymer, styrene-methyl methacrylate copolymer, styrene-acrylonitrile-methyl methacrylate copolymer, acrylonitrile-butadiene-styrene copolymer, etc.

The mixing manner of the epoxy group-containing aromatic vinyl polymer with the aromatic vinyl polymer containing no epoxy group has no particular limitation as far as it is possible to mix the both. Examples of the manner are a process of melt-kneading the both in advance, a process of blending the respective polymers when the composition of the present invention is prepared, etc.

The component (B) in the present invention is necessary to have an epoxy group content of 50 to 1,000 mmol/Kg, preferably 60 to 800 mmol/Kg and an MFR of 15 to 200 g/10 min, preferably 30 to 180 g/10 min. If the epoxy group content is less than 50 mmol/Kg, a composition having a good strength at welded part cannot be obtained, while if it exceeds 1,000 mmol/Kg, a gelling substance occurs in the resulting composition to reduce its commodity value. Further, if the MFR is outside the range of 15 to 200 g/10 min, it is impossible to obtain a good strength at welded part, with reduction in the compatibility.

The content of the epoxy group (mmol/Kg) may be measured according to a method of dissolving the aromatic vinyl polymer in a suitable solvent such as N,N-dimethylformamide, etc., followed by reacting an excess quantity of hydrochloric acid with the epoxy group to form chlorohydrin and titrating hydrochloric acid in excess with a NaOH normal solution.

In addition, in the case where the component (B) is a mixture of an epoxy group-containing aromatic vinyl polymer with an aromatic vinyl polymer containing no epoxy group, even if the epoxy group content and MFR each fall within the range of the present invention based upon the whole of the mixture, it is impossible to obtain a good strength at welded part as far as the epoxy group content of the epoxy group-containing aromatic vinyl polymer itself does not fall within the range of 50 to 1,000 mmol/Kg.

The reason is considered as follows:

If the epoxy group content of the epoxy group-containing aromatic vinyl polymer to be mixed exceeds the above-mentioned range, the compatibility of the polymer with the aromatic vinyl polymer containing no epoxy group lowers, while if the epoxy group content of the epoxy group-containing aromatic vinyl polymer is lower than the above-mentioned range, the quantity of the functional group in the aspect of the whole of the component (B) is insufficient so that the compatibility thereof with the component (B) becomes inferior; thus in either cases, only a composition being non-uniform and having an inferior compatibility is obtained.

Further, as the fibrous filler used in the present invention, known fibrous fillers may be broadly illustrated, such as glass fibers, carbon fibers, ceramics fibers, wollastonite fibers, potassium titanate fibers, etc. They are used alone or in admixture of two or more kinds, and among these, glass fibers are suitable due to their superior reinforcing effect. Further, it is preferred to previously treat the surface of these fibrous fillers with a silane compound, such as vinyltriethoxysilane, $\gamma$-aminopropyltriethoxysilane, $\gamma$-glycidoxypropyl-trimethoxysilane, $\gamma$-methacryloxypropyltrimethoxysilane or the like.

Further, the fiber-reinforced thermoplastic resin composition is obtained by melt-kneading component (A), component (B) and a fibrous filler, and the blending proportions are as follows:

(A): 20 to 95% by weight and (B): 80 to 5% by weight, preferably (A): 35 to 80% by weight and (B): 65 to 20% by weight. Further, the proportion of the fibrous filler is 5 to 150 parts by weight, preferably 20 to 120 parts by weight based upon the total parts by weight of (A)+(B). If the proportion of the component (A) is less than 20% by weight, the chemical resistance and the reinforcing effect due to the fibrous filler notably lower, while if it exceeds 95% by weight, inhibition of warpage is insufficient. Further, if the proportion of the fibrous filler is less than 5 parts by weight, a notable reinforcing effect cannot be expected, while if it exceeds 150 parts by weight, preparation of the composition is difficult and the appearance of the resulting molded products is notably deteriorated.

The process for producing the fiber-reinforced composition of the present invention has no particular limitation, and various processes may be employed. For example, the component (A), the component (B) and a fibrous filler, each in a definite quantity, are mixed by means of a mixing device such as Henschel mixer, tumbler belnder or the like, followed by melt-kneading at a temperature of 160° to 300°C, preferably 200° to 280°C, by means of a known device such as conventional single-screw or twin-screw extruder, Bambury mixer or the like to obtain the composition. Further, in order to inhibit the fibrous filler from cutting, there may be also employed a process of using an extruder provided with a filler-feeding hopper midway the cylinder, besides a usual hopper, the respective hoppers being equipped with a metering feeder, feeding the components (A) and (B) mixed in advance, so as to finally give definite proportions, through the normal hopper of the extruder, feeding the fiberous filler through the filler-feeding hopper and melt-kneading them at the above-mentioned temperature. If necessary, it is possible to add a stabilizer, an antistatic agent, a plasticizer, a lubricant, a pigment, etc. to the composition of the present invention, at the time of the melt-kneading.

The above-mentioned melt-kneading may be carried out at 160° to 300°C, preferably 200° to 260°C, using a conventional apparatus such as a single or twin screw extruder, Bambury mixer, etc. Further, if necessary, it is also possible to add stabilizer, plasticizer, antistatic agent, lubricant, pigment, filler, etc. at the time of the melt-kneading.

As described above, the thermoplastic resin composition of the present invention is a high-molecular reactive one obtained by combining a modified polyolefin as a polyolefin component with an epoxy group-

6

containing aromatic vinyl polymer as an aromatic vinyl polymer component, and at that time, by limiting the functional group content of the unsaturated carboxylic acid or its anhydride and MFR of the modified polyolefin, and also limiting the epoxy group content and MFR of the epoxy group-containing aromatic polymer, it has become possible to make adequate the compatibility and mechanical properties of the resulting composition.

As described above, the fiber-reinforced thermoplastic resin composition of the present invention is a product obtained by making up a combination of a modified polyolefin as a polyolefin component with an epoxy group-containing aromatic vinyl polymer as an aromatic vinyl polymer component, into a matrix, followed by blending a fibrous filler with the matrix. At that time, the modified polyolefin had the content and MFR of the monomers of the unsaturated carboxylic acid or its anhydride limited, and the epoxy group-containing aromatic vinyl polymer had the epoxy group content and MFR limited, whereby it has been possible to obtain a reinforced thermoplastic resin composition having an adequate compatibility between the modified polyolefin and the epoxy group-containing aromatic vinyl polymer, further having superior strength, stiffness and chemical resistance and at the same time having superior dimensional stability and strength at welded part.

(Example)

The present invention will be described in more detail by way of Examples and Comparative examples, but it should not be construed to be limited thereto.

In addition, the evalution methods for the resulting products were carried out according to the following methods:

(1) Tensile strength (non-welded part):

Its measurement was carried out according to JIS K-7113. As the test piece, JIS No. 1 test piece prepared by injection molding was used.

(2) Tensile strength (at welded part):

Its measurement was carried out according to JIS K-7113. The test piece was prepared by injection molding and its shape was the same as that of JIS No. 1 test piece, but a mold having a gate at both the ends of the test piece was used to form a welded part at the central part.

(3) Percentage of retention of tensile strength at welded part:

This percentage was calculated according to the following equation from the results of the items (1) and (2):

$$\left( \begin{array}{l} \text{Percentage of retention} \\ \text{of tensile strength} \\ \text{at welded part} \end{array} \right) = \frac{\text{Tensile strength at welded part}}{\text{Tensile strength (at non-welded part)}} \times 100\%$$

(4) Chemical resistance:

A test piece of 4 mm × 10 mm × 100 mm prepared by injection molding was immersed in acetone at 23°C for 30 days and change of its appearance was observed. Judgement was expressed by the following symbols:

Unchanged sample: o
Sample having formed deterioration: △
Sample having formed notable deterioration or dissolution: X

(5) Flexural strength and flexural modulus:

They were measured according to JIS K-7203. Namely with a test piece of 4 mm × 10 mm × 100 mm prepared by injection molding, its flexural modulus and flexural strength were measured in atmospheres at 23°C, 50°C and 80°C, respectively.

(6) Izodt impact strength (notched):

This was measured according to JIS K-7110. As the test piece, JIS No.2A test piece prepared according to injection molding method was used.

(7) Diameter of dispersed particles:

Pellets of the resulting composition was pressed by hot press for 2 minutes to prepare an isotropical sheet of 180 to 200 μ thick. This sheet was broken in liquid nitrogen and the particle diameter of the resulting dispersed particles on the rupture cross-section thereof was observed by a scanning type electronic microscope.

(8) Diameter of dispersed particles (after annealing):

Pellets of the resulting composition was kept in molten state at 250°C for 60 minutes in Instron capillary rheometer (tradename, made by Instron Co., Ltd.), followed by extruding at a low shear rate of 12 $sec^{-1}$, subjecting the resulting extrudate to a hot press and observing the particle diameter of dispersed particles in the same manner as in the above item (5) to examine the presence or absence of agglomerated and enlarged particles.

(9) Quantity of warpage deformed:

A flat sheet (film gate) of 150 mm × 150 mm × 2 mm (thick) was prepared according to injection molding, followed by allowing it to stand at 23°C in the atmosphere of 50% RH for 72 hours, for conditioning, placing the sheet on a surface plane, pressing one corner of the sheet by a weight, varying the position of the height of the opposite corner from the surface plane, raised at the time of the above pressing, measuring the resulting positions and rendering the maximum value of one sheet as the quantity of warpage deformed.

Further, as the components, the following were used, and all the MFR values described therein are those measured under conditions of 230°C and 2.16 Kg load:

(i) Maleic anhydride-modified polypropylene-1:

A powdery propylene homopolymer having an MFR of 0.5 g/10 min (100 parts by weight), maleic anhydride (0.5 part by weight), 1,3-bis(t-butylperoxyisopropyl)-benzene (0.05 part by weight) and 2,6-di-t-butyl-p-cresol (0.1 part by weight) were dry-blended by Henschel mixer (tradename) in advance, followed by melt-kneading the resulting blend at 200°C by a twin-screw extruder (screw diameter: 45 mm and L/D: 30) to obtain a maleic anhydride-modified polypropylene (MFR: 30 g/10 min and graft ratio: 0.31% by weight) (functional group quantity: 31 mmol/Kg) (abbreviated to PP-MAH-1 in Tables 1 to 4).

(ii) Maleic anhydride-modified polypropylene-2:

The above (i) was repeated except that the quantity of 1,3-bis(t-butylperoxyisopropyl)benzene added was varied to 0.15 part by weight, to obtain a maleic anhydride-modified polypropylene (MFR: 160 g/10 min and graft ratio: 0.43% by weight) (functional group quantity: 43 mmol/Kg) (abbreviated to PP-MAH-2 in Tables 1 to 4).

(iii) Maleic anhydride-modified polypropylene-3:

The above (i) was repeated except that the quantity of 1,3-bis(t-butylperoxyisopropyl)benzene added was varied to 0.22 part by weight, to obtain a maleic anhydride-modified polypropylene (MFR: 270 g/10 min and graft ratio: 0.45% by weight) (functional group quantity: 45 mmol/Kg) (abbreviated to PP-MAH-3 in Tables 1 to 4).

(iv) Acrylic acid-modified polypropylene:

An acrylic acid-modified polypropylene (PB-1001 (tradename) made by BP Performance Plastic Co., Ltd.) (MFR: 42 g/10 min, acrylic acid graft ratio: 6% by weight) (functional group quantity: 830 mmol/Kg) (abbreviated to PP-AA, in Tables 1 to 4).

(v) Polypropylene-1:

A propylene homopolymer (MFR: 0.5 g/10 min) (abbreviated to PP-1 in Tables 1 to 4).

(vi) Polypropylene-2:

A propylene homopolymer (MFR: 25 g/10 mm) (abbreviated to PP-2 in Tables 1 to 4).

(vii) Polypropylene-3:

A powdery propylene homopolymer (MFR: 0.5 g/10 min) (100 parts by weight), 1,3-bis(t-butylperoxyisopropyl)-benzene (0.17 part by weight) and 2,6-di-t-butyl-p-cresole (0.1 part by weight) were dry-blended by Henschel mixer (tradename) in advance, followed by melt-kneading the resulting blend by means of a twin-screw extruder (screw diameter: 45 mm and L/D = 30) at 200°C to obtain a propylene homopolymer (MFR: 160 g/10 min) (abbreviated to PP-3 in Tables 1 to 4).

(viii) Ethylene-propylene rubber:

An ethylene-propylene rubber having an MFR of 3.5 g/10 min and a propylene content of 26% by weight (EP02P made by Japan Synthetic Rubber Co., Ltd.) (abbreviated to EPR in Tables 1 to 4).

(ix) Styrene-glycidyl methacrylate copolymer-1:

A styrene-glycidyl methacrylate copolymer (Blenmer-CP-1505S (tradename) made by Nippon Oil and Fats Co., Ltd.) (weight average molecular weight: 150,000, MFR: 49 g/10 min and quantity of glycidyl methacrylate: 5% by weight) (epoxy group content: 350 mmol/Kg) (abbreviated to St-GMA-1 in Tables 1 to 4).

(x) Styrene-glycidyl methacrylate copolymer-2:

A styrene-glycidyl methacrylate copolymer (Blenmer-CP-1005S (tradename) made by Nippon Oil and Fats Co., Ltd.) (weight average molecular weight: 100,000, MFR 170 g/10 min and quantity of glycidyl methacrylate: 5% by weight) (epoxy group content: 350 mmol/Kg) (abbreviated to St-GMA-2 in Tables 1 to 4).

(xi) Styrene-glycidyl methacrylate copolymer-3:

A styrene-glycidyl methacrylate copolymer (Blenmer-CP-50S (tradename) made by Nippon Oil and Fats Co., Ltd.) (weight average molecular weight: 21,000, MFR: 1,000 g/10 min or more (unmeasurable) and quantity of glycidyl methacrylate: 50% by weight) (epoxy group content: 3,500 mmol/Kg) (abbreviated to St-GMA-3 in Tables 1 to 4).

(xii) Styrene-acrylonitrile-glycidyl methacrylate copolymer-1:

A styrene-acrylonitrile-glycidyl methacrylate copolymer (Blenmer-CP-510SA (tradename) made by Nippon Oil and Fats Co., Ltd.) (weight average molecular weight: 50,000, MFR: 640 g/10 min and quantity of glycidyl methacrylate: 10% by weight) (epoxy group content: 700 mmol/Kg) (abbreviated to St-AN-GMA-1 in Tables 1 to 4).

(xiii) Styrene-acrylonitrile-glycidyl methacrylate copolymer-2:

A styrene-acrylonitrile-glycidyl methacrylate copolymer (Blenmer-CP-20SA (tradename) made by Nippon Oil and Fats Co., Ltd.) (weight average molecular weight: 8,100, MFR: 1,000 g/10 min or more (unmeasurable), quantity of glycidyl methacrylate: 20% by weight) (epoxy group content: 1,400 mmol/Kg) (abbreviated to St-AN-GMA-2 in Tables 1 to 4).

(xiv) Styrene-maleic anhydride copolymer:

A styrene-maleic anhydride copolymer having an MFR of 3.2 g/10 min and a content of maleic anhydride functional group of 820 mmol/Kg (content of maleic anhydride: 8% by weight) (Dylark 232 made by ARCO CHEMICAL Co., Ltd.) (90 parts by weight), a powdery polystyrene having an MFR of 25 g/10 min (10 parts by weight) and 1,3-bis(t-butylperoxyisopropyl)benzene (0.2 part by weight) were dry-blended by Henschel mixer in advance, followed by melt-kneading the resulting blend at 250°C by a twin-screw extruder (45 mm, L/D = 30) to obtain the captioned styrene-maleic anhydride copolymer having an MFR of 21 g/10 min and a content of maleic anhydride functional group of 730 mmol/Kg (content of maleic anhydride: 7.2% by weight) (abbreviated to St-MAH in Tables 1 to 4).

(xv) Polystyrene:

A polystyrene (weight average molecular weight: 210,000 and MFR: 10 g/10 min) (abbreviated to PS in Tables 1 to 4).

(xvi) Glass fiber:

A glass fiber of 13 $\mu$ in diameter and 3 mm long, subjected to surface treatment with an aminosilane (abbreviated to GF in Tables 1 to 4).

(xvii) Mica:

A mica having an average particle diameter of 15 $\mu$ and an aspect ratio of 30.

(xviii) Talc:

A talc having an average particle diameter of 4 $\mu$ and an aspect ratio of 20.

Examples 1 - 10

The respective components were fed each in a definite quantity as shown below in Table 1 into Henschel mixer (tradename), followed by dry-blending and melt-kneading the resulting blend by a twin-screw extruder (screw diameter: 45 mm and L/D = 30) at 250°C, preparing test pieces from pellets of the resulting compositions by injection molding at 250°C, measuring the tensile strength at non-welded part, tensile strength at welded part and stiffness, and calculating the percentage of retention of tensile strength at welded part, from tensile strength at non-welded part and tensile strength at welded part. Further, the pellets of the respective compositions and materials obtained by subjecting the above pellets to annealing treatment by capillary rheometer (tradename) at 250°C were subjected to hot press (250°C), followed by observing the diameters of the respective dispersed particles. The results are shown together in Table 1.

Comparative examples 1 - 3

The respective test pieces of the above single polypropylene (PP-2), single polystyrene (PS) and single styrene-glycidyl methacrylate copolymer (St-GMA-1) were prepared by injection molding (at 250°C), followed by measuring the respective tensile strengths at non-welded part, tensile strengths at welded part and stiffnesses. Further, the respective percentages of retention of tensile strength at welded part were calculated from the tensile strengths at non-welded part and tensile strengths at welded part. The results are shown together in Table 2.

Comparative examples 4 - 11

The respective components shown in Table 2 were blended and melt-kneaded in the same manner as in Examples 1-10, followed by evaluating the resulting compositions. The results are shown together in Table 2.

Examples 11 - 22 and Comparative examples 12 - 26

The respective components each in a definite blended quantity, excluding glass fibers, shown in Tables 3 and 4 were fed into Henschel mixer and dry-blended, followed by feeding the resulting blend into a normal hopper of a twin-screw extruder (screw diameter: 45 mm and L/D = 30) provided with the normal hopper and a filler-feeding hopper provided midway the cylinder, the respective hoppers being each provided with a metering feeder, so as to finally give difinite proportions, feeding glass fibers through the filler-feeding hopper, melt-kneading them at 250°C, injection-molding pellets of the resulting compositions at 250°C, to prepare test pieces and flat sheets, and measuring Izodt impulse strength (notched), flexural strength, flexural modulus, tensile strength at welded part, chemical resistance and quantity of warpage deformed. The results are collectively shown in Tables 3 and 4.

Table 1

| | Example | | 1 | 2 | 3 | 4 | 5 |
|---|---|---|---|---|---|---|---|
| Component (A) | Blended quantity (wt%) | PP-MAH-1 | 70 | | 35 | 35 | |
| | | PP-MAH-2 | | | | | 35 |
| | | PP-MAH-3 | | | | | |
| | | PP - AA | | 70 | | | |
| | | PP - 1 | | | 35 | | |
| | | PP - 2 | | | | 35 | |
| | | PP - 3 | | | | | 35 |
| | Component (A), functional group content (mmol/kg) | | 31 | 830 | 15 | 15 | 22 |
| | Component (A), MFR (g/10 min) | | 30 | 42 | 44 | 28 | 160 |
| Component (B) | Blended quantity (wt%) | St-GMA-1 | | | | | |
| | | St-GMA-2 | 30 | 30 | 30 | 30 | 30 |
| | | St-GMA-3 | | | | | |
| | | St-AN-GMA-1 | | | | | |
| | | St-AN-GMA-2 | | | | | |
| | | P S | | | | | |
| | Component (B), epoxy group content (mmol/kg) | | 350 | 350 | 350 | 350 | 350 |
| | Component (B), MFR (g/10 min) | | 170 | 170 | 170 | 170 | 170 |

EP 0 456 179 B1

EP 0 456 179 B1

Table 1 (continued)

| | | | 6 | 7 | 8 | 9 | 10 |
|---|---|---|---|---|---|---|---|
| | Example | | | | | | |
| Component (A) | Blended quantity (wt%) | PP-MAH-1 | 70 | 70 | 70 | 55 | 40 |
| | | PP-MAH-2 | | | | | |
| | | PP-MAH-3 | | | | | |
| | | PP – AA | | | | | |
| | | PP – 1 | | | | | |
| | | PP – 2 | | | | | |
| | | PP – 3 | | | | | |
| | Component (A), functional group content (mmol/kg) | | 31 | 31 | 31 | 31 | 31 |
| | Component (A) MFR (g/10 min) | | 30 | 30 | 30 | 30 | 30 |
| Component (B) | Blended quantity (wt%) | St-GMA-1 | 30 | | | | 60 |
| | | St-GMA-2 | | | 10 | 45 | |
| | | St-GMA-3 | | | | | |
| | | St-AN-GMA-1 | | 15 | | | |
| | | St-AN-GMA-2 | | | | | |
| | | P S | | 15 | 20 | | |
| | Component (B), epoxy group content (mmol/kg) | | 350 | 350 | 120 | 350 | 350 |
| | Component (B) MFR (g/10 min) | | 49 | 83 | 27 | 170 | 49 |

12

Table 1 (continued)

| Example | | 1 | 2 | 3 | 4 | 5 |
|---|---|---|---|---|---|---|
| Tensile strength at welded part (kg/cm$^2$) | | 404 | 411 | 393 | 397 | 400 |
| Tensile strength at non-welded part (kg/cm$^2$) | | 412 | 410 | 418 | 409 | 401 |
| % of retention of tensile strength at welded part (%) | | 98 | 100 | 94 | 97 | 100 |
| Flexural modulus (kg/cm$^2$) | 23°C | 21,100 | 20,900 | 21,500 | 21,500 | 21,300 |
| | 50°C | 15,500 | 15,300 | 15,900 | 16,000 | 15,600 |
| | 80°C | 11,700 | 11,400 | 12,000 | 11,900 | 11,800 |
| Flexural strength (kg/cm$^2$) | 23°C | 534 | 536 | 522 | 520 | 527 |
| | 50°C | 377 | 375 | 360 | 364 | 371 |
| | 80°C | 255 | 258 | 242 | 245 | 253 |
| Chemical strength | | O | O | O | O | O |
| Diameter of dispersed particles (μ) | | 0.5∼1 | 0.5∼1 | 1∼2 | 1∼2 | 1∼2 |
| Diameter of dispersed particles (after annealing) (μ) | | 0.5∼1 | 0.5∼1 | 1∼2 | 1∼2 | 1∼2 |

EP 0 456 179 B1

Table 1 (continued)

| Example | | 6 | 7 | 8 | 9 | 10 |
|---|---|---|---|---|---|---|
| Tensile strength at welded part (kg/cm$^2$) | | 406 | 392 | 394 | 396 | 403 |
| Tensile strength at non-welded part (kg/cm$^2$) | | 414 | 408 | 406 | 426 | 433 |
| % of retention of tensile strength at welded part (%) | | 98 | 96 | 97 | 93 | 93 |
| Flexural modulus (kg/cm$^2$) | 23°C | 21,400 | 20,800 | 20,600 | 23,300 | 26,800 |
| | 50°C | 15,400 | 15,100 | 14,800 | 18,200 | 20,600 |
| | 80°C | 11,700 | 11,500 | 11,100 | 14,200 | 17,400 |
| Flexural strength (kg/cm$^2$) | 23°C | 538 | 516 | 509 | 551 | 583 |
| | 50°C | 381 | 356 | 361 | 410 | 440 |
| | 80°C | 262 | 247 | 234 | 274 | 297 |
| Chemical strength | | O | O | O | O | O |
| Diameter of dispersed particles ($\mu$) | | 0.5~1 | 1~2 | 1~2 | 1~2 | 1~2 |
| Diameter of dispersed particles (after annealing) ($\mu$) | | 0.5~1 | 1~2 | 1~2 | 1~2 | 1~2 |

EP 0 456 179 B1

Table 2

| Comparative example | | | 1 | 2 | 3 | 4 | 5 |
|---|---|---|---|---|---|---|---|
| Component (A) | Blended quantity (wt%) | PP-MAH-1 | | | | | 5 |
| | | PP-MAH-2 | | | | | |
| | | PP-MAH-3 | | | | | |
| | | PP - AA | | | | | |
| | | PP - 1 | | | | | |
| | | PP - 2 | 100 | | | 70 | 65 |
| | | PP - 3 | | | | | |
| | Component (A), functional group content (mmol/kg) | | 0 | | | 0 | 2.5 |
| | Component (A) MFR (g/10 min) | | 25 | | | 25 | 25 |
| Component (B) | Blended quantity (wt%) | St-GMA-1 | | | 100 | | |
| | | St-GMA-2 | | | | | 30 |
| | | St-GMA-3 | | | | | |
| | | St-AN-GMA-1 | | | | | |
| | | St-AN-GMA-2 | | | | | |
| | | P.S | | 100 | | 30 | |
| | Component (B), epoxy group content (mmol/kg) | | | 0 | 350 | 0 | 350 |
| | Component (B) MFR (g/10 min) | | | 10 | 49 | 10 | 170 |

EP 0 456 179 B1

Table 2 (continued)

| | | | 6 | 7 | 8 | 9 | 10 | 11 |
|---|---|---|---|---|---|---|---|---|
| Comparative example | | | 6 | 7 | 8 | 9 | 10 | 11 |
| Component (A) | Blended quantity (wt%) | PP-MAH-1 | | 70 | 70 | 70 | 70 | 70 |
| | | PP-MAH-2 | | | | | | |
| | | PP-MAH-3 | 70 | | | | | |
| | | PP - AA | | | | | | |
| | | PP - 1 | | | | | | |
| | | PP - 2 | | | | | | |
| | | PP - 3 | | | | | | |
| | Component (A), functional group content (mmol/kg) | | 45 | 31 | 31 | 31 | 31 | 31 |
| | Component (A) MFR (g/10 min) | | 270 | 30 | 30 | 30 | 30 | 30 |
| Component (B) | Blended quantity (wt%) | St-GMA-1 | | | | | | |
| | | St-GMA-2 | 30 | 3 | | | | |
| | | St-GMA-3 | | | | | | 3 |
| | | St-AN-GMA-1 | | | | 30 | | |
| | | St-AN-GMA-2 | | | | 30 | 8 | |
| | | P S | | 27 | | | 22 | 27 |
| | Component (B), epoxy group content (mmol/kg) | | 350 | 35 | 700 | 1,400 | 370 | 350 |
| | Component (B) MFR (g/10 min) | | 170 | 16 | 640 | 1,000 or more | 39 | 18 |

EP 0 456 179 B1

## Table 2 (continued)

| Comparative example | | 1 | 2 | 3 | 4 | 5 |
|---|---|---|---|---|---|---|
| Tensile strength at welded part (kg/cm$^2$) | | 359 | 415 | 414 | 152 | 128 |
| Tensile strength at non-welded part (kg/cm$^2$) | | 358 | 442 | 436 | 324 | 303 |
| % of retention of tensile strength at welded part (%) | | 100 | 94 | 95 | 47 | 42 |
| Flexural modulus (kg/cm$^2$) | 23°C | 13,100 | 32,600 | 31,500 | 14,400 | 16,200 |
| | 50°C | 6,890 | 24,900 | 24,300 | 7,920 | 9,070 |
| | 80°C | 3,880 | 20,100 | 19,900 | 4,620 | 5,350 |
| Flexural strength (kg/cm$^2$) | 23°C | 395 | 626 | 608 | 442 | 457 |
| | 50°C | 225 | 444 | 432 | 241 | 251 |
| | 80°C | 127 | 315 | 309 | 131 | 140 |
| Chemical strength | | O | X | X | X | △ |
| Diameter of dispersed particles ($\mu$) | | | | | 20∼50 | 2∼10 |
| Diameter of dispersed particles (after annealing ($\mu$) | | | | | 50∼100 | 50∼100 |

EP 0 456 179 B1

Table 2 (continued)

| Comparative example | 6 | 7 | 8 | 9 | 10 | 11 |
|---|---|---|---|---|---|---|
| Tensile strength at welded part (kg/cm2) | | 155 | 199 | | 149 | 138 |
| Tensile strength at non-welded part (kg/cm2) | | 317 | 369 | | 310 | 300 |
| % of retention of tensile strength at welded part (%) | | 49 | 54 | | 48 | 46 |
| Flexural modulus (kg/cm2) 23°C | | 16,700 | 15,300 | | 15,000 | 14,800 |
| 50°C | | 9,440 | 8,720 | | 8,310 | 8,170 |
| 80°C | | 5,590 | 5,210 | | 4,880 | 4,780 |
| Flexural strength (kg/cm2) 23°C | | 461 | 450 | | 445 | 439 |
| 50°C | | 257 | 248 | | 243 | 237 |
| 80°C | | 142 | 135 | | 133 | 126 |
| Chemical strength | | △ | x | | x | x |
| Diameter of dispersed particles (μ) | 5~30 | 2~10 | 5~30 | | 5~30 | 5~30 |
| Diameter of dispersed particles (after annealing) (μ) | 50~100 | 50~100 | 50~100 | | 50~100 | 50~100 |

As seen from the results of Table 1, the thermoplastic resin compositions of Examples of the present invention have various advantages such as superior stiffness, particularly stiffness at a high temperature range of 50° to 80°C, finely-divided, dispersed particles, notably improved tensile strength at welded part, percentage of retention of tensile strength at welded part and chemical resistance, no change (larger agglomeration) in the diameter of dispersed particles, etc.

18

On the other hand, as seen from the results of Table 2, single polypropylene in Comparative example 1 is insufficient in the strength and stiffness, particularly stiffness in a range of high temperatures; and single polystyrene in Comparative example 2 and single styrene-glycidyl methacrylate copolymer in Comparative example 3 are both inferior in chemical resistance. Comparative example 4 is directed to a blend of polypropylene containing no functional group with polystyrene containing no epoxy group. In this case, the dispersed particles are notably giant and the strength at welded part is very low, and further the stiffness is almost not improved. Comparative example 5 is directed to a case where the functional group content of component (A) is insufficient and Comparative example 7 is directed to a case where the epoxy group content of component (B) is insufficient. In both the cases, while the dispersed particles are finely divided to a certain extent, the strength at welded part is very low and the dispersed particles resulted in a notable agglomeration and enlargement due to annealing. Comparative example 6 is directed to a case where the MFR of component (A) is outside the range of the present invention. In this case, the MFR of the resulting composition was too high to make injection molding impossible, and also the dispersed particles were giant. Comparative example 8 is directed to a case where the MFR of component (B) is outside the range of the present invention. In this case, the dispersed particles were large, the strength at welded part was very low and improvement in the stiffness was slight. Comparative example 9 is directed to a case where the epoxy group content and MFR of component (B) are outside the ranges of the present invention. In this case, gelation occurred and melt-kneading was impossible. Comparative examples 10 and 11 are both directed to a case where an epoxy group-containing aromatic vinyl polymer whose epoxy group content is outside the range of the present invention is used together with polystyrene containing no epoxy group, but the epoxy group content as the whole in component (B) and MFR are within the range of the present invention. In this case, the dispersed particles were giant, the strength at welded part was low and improvement in the stiffness was slight.

As seen from the results of Table 3, any of the fiber-reinforced compositions in Examples of the present invention have superior mechanical strengths such as high-impact strength, flexural strength, etc., strength at welded part, stiffness and chemical resistance and also have the warpage deformation at the time of molding inhibited to a large extent.

Whereas, as seen from the results of Table 4, Comparative example 12 as an example of a glass fiber-reinforced polypropylene shows a notably large warpage deformation, and Comparative example 13 as an example of a glass fiber-reinforced polystyrene shows a small glass fiber-reinforced effect, that is, insufficient impact strength and flexural strength and further an inferior chemical resistance. In the case of Comparative example 14, the functional group content and MFR of the component (A) and the epoxy group content and MFR of the component (B) fall within the ranges of the present invention, but since the quantities thereof blended are inadequate so that the mechanical strengths are low and the chemical resistance is inferior. In the cases of Comparative examples 15 and 16 directed to a polypropylene reinforced with glass fibers and mica and a polypropylene reinforced with glass fibers and talc, while the warpage deformation is inhibitied, the strength at welded part is far reduced. In the case of Comparative example 17 wherein a rubbery component is blended with glass fibers and a polypropylene, not only the effect of inhibiting warpage deformation is insufficient, but also reductions in the strength at welded part and stiffness are unavoidable. In the case of Comparative example 18 wherein a rubbery component is blended with a polypropylene and the blend is reinforced with glass fibers and talc, the strength at welded part is still far reduced. In the case of Comparative example 19 wherein a polystyrene resin containing no epoxy group is blended with glass fibers and a polypropylene, not only the strengths at welded part and at non-welded part are reduced, but also improvement in the warpage deformation is insufficient and also the chemical resistance is inferior.

In the case of Comparative example 20 wherein a styrene-maleic acid copolymer is blended with glass fibers and a polypropylene, the compatibility of the polypropylene component with the styrene polymer component is insufficient so that the mechanical strengths at welded part and at non-welded part are inferior and also the chemical resistance is inferior.

Even in the case of a composition having glass fibers and a modified polypropylene blended with an epoxy group-containing aromatic vinyl polymer, if the conditions of the composition fall outside the range of the present invention, it is insufficient. For example, in the case of Comparative example 21 wherein the content of the functional group of the component (A) is insufficient, the mechanical strengths and stiffness are insufficient, the strength at welded part is also low and the warpage deformation is not inhibited so much, and further the chemical resistance is inferior. In the cases of Comparative exmaples 22 and 23 wherein the respective MFRs of the component (A) and the component (B) fall outside the ranges of the present invention, the strength at welded part is low and the chemical strength is inferior, in either cases. In the case of Comparative exmaple 24 wherein the epoxy group content and MFR of the component (B) fall outside the range of the present invention, gelation occurs to make melt-kneading impossible. In the cases of Comparative examples 25 and 26 wherein an epoxy group-containing aromatic vinyl polymer falling outside the range of the present invention is used and a polystyrene containing no epoxy group is used therewith, and the epoxy group content and MFR as the whole of the component (B) fall within the range of the present invention, the strength at welded part is reduced and also the warpage-inhibiting effect is poor and further the chemical resistance is inferior.

(Effectiveness of the Invention)

As described above, the thermoplastic resin composition of the present invention is very suitable as molding materials in the aspect of melt viscosity; since the compatibility of the polyolefin component with the aromatic vinyl polymer is superior, the dispersed particles are finely divided so that the composition has a superior strength at welded part, stiffness, particularly stiffness at a high temperature range of 50° to 80°C, dimensional stability and chemical resistance; and even when the composition is retained in molten state for a long time, no agglomeration-enlargement occurs so that it is possible to obtain the above-mentioned various superior characteristics without depending upon the size of injection molding machine, the size of molded products, the retention time of the composition inside the molding machine, etc. The thermoplastic resin composition of the present invention is suitably usable for appliance parts, automobile parts, etc.

The fiber-reinforced thermoplastic resin composition comprising a polyolefin, an aromatic vinyl polymer and a fibrous filler has a specified polyolefin and aromatic vinyl polymer; hence the compatibility of these is notably improved and a superior reinforcing effect of the fibrous filler is exhibited. Thus, the composition of the present invention has a superior strength, stiffness and chemical resistance and at the same time, a good dimensional stability and a sufficiently high strength at welded part.

Thus, the composition of the present invention causes no cracking by self tapping for screwing the resulting molded product, due to the high strength at welded part and also has a superior strength, stiffness, chemical resistance, a good dimensional stability; thus the composition is suitably usable for various structural parts, functional parts, etc.

EP 0 456 179 B1

Table 3

| | | | 11 | 12 | 13 | 14 | 15 | 16 |
|---|---|---|---|---|---|---|---|---|
| Component (A) | Blended amount (wt%) | PP-MAH-1 | 70 | | 35 | 35 | | 70 |
| | | PP-MAH-2 | | | | | 35 | |
| | | PP-MAH-3 | | | | | | |
| | | PP - AA | | 70 | | | | |
| | | PP - 1 | | | 35 | | | |
| | | PP - 2 | | | | 35 | | |
| | | PP - 3 | | | | | 35 | |
| | | E P R | | | | | | |
| | Functional group content of component(A) (mmol/kg) | | 31 | 830 | 15 | 15 | 22 | 31 |
| | MFR of component (A) (g/10 min) | | 30 | 42 | 4.4 | 28 | 160 | 30 |
| Component (B) | Blended amount (wt%) | St-GMA-1 | | | | | | 30 |
| | | St-GMA-2 | 30 | 30 | 30 | 30 | 30 | |
| | | St-GMA-3 | | | | | | |
| | | St-AN-GMA-1 | | | | | | |
| | | St-AN-GMA-2 | | | | | | |
| | | St-MAH | | | | | | |
| | | P S | | | | | | |
| | Epoxy group content of component (B) (mmol/kg) | | 350 | 350 | 350 | 350 | 350 | 350 |
| | MFR of component (B) (g/10 min) | | 170 | 170 | 170 | 170 | 170 | 49 |

Table 3 (continued)

| | | Example | 17 | 18 | 19 | 20 | 21 | 22 |
|---|---|---|---|---|---|---|---|---|
| Component (A) | Blended amount (wt%) | PP-MAH-1 | 70 | 70 | 70 | 70 | 40 | 20 |
| | | PP-MAH-2 | | | | | | |
| | | PP-MAH-3 | | | | | | |
| | | PP - AA | | | | | | |
| | | PP - 1 | | | | | | |
| | | PP - 2 | | | | | | |
| | | PP - 3 | | | | | | |
| | | E P R | | | | | | |
| | Functional group content of component (A) (mmol/kg) | | 31 | 31 | 31 | 31 | 31 | 31 |
| | MFR of component (A) (g/10 min) | | 30 | 30 | 30 | 30 | 30 | 30 |
| Component (B) | Blended amount (wt%) | St-GMA-1 | | | | | 60 | 80 |
| | | St-GMA-2 | | 10 | 30 | 30 | | |
| | | St-GMA-3 | | | | | | |
| | | St-AN-GMA-1 | 15 | | | | | |
| | | St-AN-GMA-2 | | | | | | |
| | | St-MAH | | | | | | |
| | | P S | 15 | 20 | | | | |
| | Epoxy group content of component (B) (mmol/kg) | | 350 | 120 | 350 | 350 | 350 | 350 |
| | MFR of component (B) (g/10 min) | | 117 | 43 | 170 | 170 | 49 | 49 |

EP 0 456 179 B1

Table 3 (continued)

| Filler | | Example | 11 | 12 | 13 | 14 | 15 | 16 |
|---|---|---|---|---|---|---|---|---|
| Blended *1 amount (wt.parts) | G F / Mica / Talc | | 50 | 50 | 50 | 50 | 50 | 50 |
| Izodt impact strength (notched) (kg-cm/cm$^2$) | | | 17.2 | 15.1 | 16.8 | 14.4 | 15.9 | 16.0 |
| Flexural strength (kg/cm$^2$) | | | 1,750 | 1,740 | 1,610 | 1,690 | 1,730 | 1,830 |
| Flexural modulus (kg/cm$^2$) | | | 78,800 | 75,300 | 72,100 | 75,700 | 74,400 | 77,000 |
| Tensile strength at welded part (kg/cm$^2$) | | | 486 | 462 | 441 | 479 | 473 | 480 |
| Chemical resistance | | | O | O | O | O | O | O |
| Quantity of warpage deformation (mm) | | | 1.2 | 0.8 | 2.5 | 1.2 | 1.9 | 2.0 |

Table 3 (continued)

| Example | | | 17 | 18 | 19 | 20 | 21 | 22 |
|---|---|---|---|---|---|---|---|---|
| Filler | Blended *1 amount (wt.parts) | G   F Mica Talc | 50 | 50 | 10 | 100 | 50 | 50 |
| Izodt impact strength (notched) (kg-cm/cm$^2$) | | | 13.6 | 14.9 | 10.4 | 20.2 | 13.5 | 10.3 |
| Flexural strength (kg/cm$^2$) | | | 1,620 | 1,660 | 1,280 | 2,070 | 1,890 | 1,720 |
| Flexural modulus (kg/cm$^2$) | | | 72,600 | 74,900 | 40,500 | 108,000 | 79,600 | 80,200 |
| Tensile strength at welded part (kg/cm$^2$) | | | 437 | 455 | 409 | 423 | 410 | 406 |
| Chemical resistance | | | O | O | O | O | O | O |
| Quantity of warpage deformation (mm) | | | 0.9 | 1.6 | 1.0 | 2.3 | 0.7 | 0.5 |

*1    The quantity of filler blended refers to that based on the total 100 parts by weight of (A) + (B)

Table 4

| Comparative example | | | 12 | 13 | 14 | 15 | 16 | 17 | 18 |
|---|---|---|---|---|---|---|---|---|---|
| Component (A) | Blended amount (wt%) | PP-MAH-1 | 100 | | 10 | 100 | 100 | 80 | 80 |
| | | PP-MAH-2 | | | | | | | |
| | | PP-MAH-3 | | | | | | | |
| | | PP - AA | | | | | | | |
| | | PP - 1 | | | | | | | |
| | | PP - 2 | | | | | | | |
| | | PP - 3 | | | | | | | |
| | | EPR | | | | | | 20 | 20 |
| | Functional group content of component (A) (mmol/kg) | | 31 | | 31 | 31 | 31 | 25 | 25 |
| | MFR of component (A) (g/10 min) | | 30 | | 30 | 30 | 30 | 19 | 19 |
| Component (B) | Blended amount (wt%) | St-GMA-1 | | | 90 | | | | |
| | | St-GMA-2 | | | | | | | |
| | | St-GMA-3 | | | | | | | |
| | | St-AN-GMA-1 | | | | | | | |
| | | St-AN-GMA-2 | | | | | | | |
| | | St - MAH | | | | | | | |
| | | PS | | 100 | | | | | |
| | Epoxy group content of component (B) (mmol/kg) | | | | 350 | | | | |
| | MFR of component (B) (g/10 min) | | | | 49 | | | | |

EP 0 456 179 B1

Table 4 (continued)

| | | Comparative example | 19 | 20 | 21 | 22 | 23 | 24 | 25 | 26 |
|---|---|---|---|---|---|---|---|---|---|---|
| Component (A) | Blended amount (wt%) | PP-MAH-1 | 70 | 70 | 3 | | 70 | 70 | 70 | 70 |
| | | PP-MAH-2 | | | | | | | | |
| | | PP-MAH-3 | | | | 70 | | | | |
| | | PP - AA | | | | | | | | |
| | | PP - 1 | | | | | | | | |
| | | PP - 2 | | | | | | | | |
| | | PP - 3 | | | 67 | | | | | |
| | | EPR | | | | | | | | |
| | Functional group content of component (A) (mmol/kg) | | 31 | 31 | 1.3 | 45 | 31 | 31 | 31 | 31 |
| | MFR of component (A) (g/10 min) | | 30 | 30 | 25 | 270 | 30 | 30 | 30 | 30 |
| Component (B) | Blended amount (wt%) | St-GMA-1 | | | | | | | | |
| | | St-GMA-2 | | | 30 | 30 | | | | |
| | | St-GMA-3 | | | | | | | | 3 |
| | | St-AN-GMA-1 | | | | | 30 | | | |
| | | St-AN-GMA-2 | | | | | | 30 | 8 | |
| | | St - MAH | | 30 | | | | | | |
| | | PS | 30 | | | | | | 22 | 27 |
| | Epoxy group content of component (B) (mmol/kg) | | 0 | 730*2 | 350 | 350 | 700 | 1,400 | 370 | 350 |
| | MFR of component (B) (g/10 min) | | 22 | 21 | 170 | 170 | 640 | >1,000*3 | 62 | 35 |

EP 0 456 179 B1

Table 4 (continued)

| Comparative example | | | 12 | 13 | 14 | 15 | 16 | 17 | 18 |
|---|---|---|---|---|---|---|---|---|---|
| Filler | Blended amount *1 (wt.parts) | G F | 50 | 50 | 50 | 50 | 50 | 50 | 50 |
| | | Mica | | | | 30 | | | |
| | | Talc | | | | | 30 | | 30 |
| Izodt impact strength (notched) (kg-cm/cm$^2$) | | | 10.8 | 4.0 | 6.8 | 9.5 | 8.2 | 18.3 | 12.0 |
| Flexural strength (kg/cm$^2$) | | | 1,280 | 1,040 | 1,120 | 1,210 | 1,270 | 1,130 | 1,100 |
| Flexural modulus (kg/cm$^2$) | | | 52,600 | 83,200 | 82,400 | 89,000 | 80,500 | 40,200 | 64,100 |
| Tensile strength at welded part (kg/cm$^2$) | | | 321 | 440 | 420 | 190 | 220 | 211 | 171 |
| Chemical resistance | | | O | X | X | O | O | O | O |
| Quantity of warpage deformation (mm) | | | 19.6 | 1.0 | 0.5 | 4.0 | 7.5 | 11.8 | 4.5 |

EP 0 456 179 B1

Table 4 (continued)

| Comparative example | | | 19 | 20 | 21 | 22 | 23 | 24 | 25 | 26 |
|---|---|---|---|---|---|---|---|---|---|---|
| Filler | Blended amount *1 (wt.parts) | G F | 50 | 50 | 50 | 50 | 50 | 50 | 50 | 50 |
| | | Mica | | | | | | | | |
| | | Talc | | | | | | | | |
| Izod impact strength (notched) (kg-cm/cm2) | | | 6.4 | 7.5 | 7.6 | 7.9 | 8.3 | | 7.6 | 7.8 |
| Flexural strength (kg/cm2) | | | 960 | 970 | 1,160 | 1,010 | 1,030 | | 980 | 1,050 |
| Flexural modulus (kg/cm2) | | | 54,000 | 57,100 | 58,700 | 68,300 | 67,000 | | 53,700 | 56,400 |
| Tensile strength at welded part (kg/cm2) | | | 162 | 173 | 187 | 235 | 219 | | 205 | 196 |
| Chemical resistance | | | x | x | △ | △ | x | | x | x |
| Quantity of warpage deformation (mm) | | | 12.3 | 10.9 | 11.8 | 6.7 | 7.5 | | 10.1 | 10.5 |

*1 The quantity of filler blended refers to that based on the total 100 parts by weight of (A) + (B)

*2 Content of maleic anhydride function group

*3 ">1,000" refers to more than 1,000 (unmeasurable)

## Claims

1. A thermoplastic resin composition obtainable by melt-kneading a component (A) in 20 to 95% by weight, a component (B) in 80 to 5% by weight and a fibrous filler in 5 to 150 parts by weight based

28

upon 100 parts by weight of the total weight of said component (A) and said component (B), wherein:

(A) is a modified polyolefin obtained by graft-reacting a polyolefin with an unsaturated carboxylic acid or its anhydride, alone or a mixture of said modified polyolefin with a polyolefin, the content of the functional group of said unsaturated carboxylic acid or its anhydride being 3 to 1,000 mmols/Kg and the melt flow rate (MFR) thereof at 230°C and under a load of 2.16 Kg being 1 to 200 g/10 min, and

(B) is an epoxy group-containing aromatic vinyl polymer having an epoxy group content of 50 to 1,000 mmols/Kg, alone or a mixture of said epoxy group-containing aromatic vinyl polymer with an aromatic vinyl polymer containing no epoxy group, the content of epoxy group as a whole of said component (B) being 50 to 1,000 mmol/Kg and the melt flow rate (MFR) thereof at 230°C and under a load of 2.16 Kg being 15 to 200 g/10 min.

2. A thermoplastic resin composition according to claim 1 wherein said polyolefin is polypropylene.

3. A thermoplastic resin composition according to claim 1 wherein said polyolefin is a crystalline copolymer of propylene as a main component with ethylene or/and another olefin.

4. A thermoplastic resin composition according to any one of the claims 1 to 3 wherein said unsaturated carboxylic acid or its anhydride is maleic anhydride.

5. A thermoplastic resin composition according to any one of the claims 1 to 4 wherein said epoxy group-containing aromatic vinyl polymer is styrene-glycidyl methacrylate copolymer.

6. A thermoplastic resin composition according to any one of the claims 1 to 4 wherein said epoxy group-containing aromatic vinyl polymer is styrene-acrylonitril-glycidyl methacrylate copolymer.

7. A thermoplastic resin composition according to any one of the claims 1 to 6 wherein the mixing proportion of said component (A) with said component (B) is 35 to 80% by weight : 65 to 20% by weight.

**Patentansprüche**

1. Thermoplastische Harzzusammensetzung, erhältlich durch Schmelzkneten einer Komponente (A) in einem Anteil von 20 bis 95 Gew.%, einer Komponente (B) in einem Anteil von 80 bis 5 Gew.% und eines faserigen Füllstoffes in einem Anteil von 5 bis 100 Gew.Teilen, bezogen auf 100 Gew.Teile des Gesamtgewichts der Komponenten (A) und (B), worin:

(A) ein modifiziertes Polyolefin ist, erhalten durch Pfropfreaktion eines Polyolefins mit einer ungesättigten Carbonsäure oder ihres Anhydrides, alleine oder eine Mischung des modifizierten Polyolefins mit einem Polyolefin, worin der Gehalt der funktionellen Gruppen der ungesättigten Carbonsäure oder ihres Anhydrides 3 bis 1000 mmol/kg ist, und worin die Schmelzflußrate (MFR) davon bei 230°C und unter einer Beladung von 2,16 kg 1 bis 200 g/10 min ist, und

(B) ein epoxygruppenhaltiges, aromatisches Vinylpolymer mit einem Epoxygruppengehalt von 50 bis 1000 mmol/kg ist, alleine oder eine Mischung des epoxygruppenhaltigen, aromatischen Vinylpolymer mit einem aromatischen Vinylpolymer ohne Epoxygruppen, worin der Gehalt der Epoxygruppen der Komponente (B) insgesamt 50 bis 1000 mmol/kg und die Schmelzflußrate (MFR) davon bei 230°C und unter einer Beladung von 2,16 kg 15 bis 200 g/10 min ist.

2. Thermoplastische Harzzusammensetzung nach Anspruch 1, worin das Polyolefin Polypropylen ist.

3. Thermoplastische Harzzusammensetzung nach Anspruch 1, worin das Polyolefin ein kristallines Copolymer von Propylen als eine Hauptkomponente mit Ethylen und/oder einem anderen Olefin ist.

4. Thermoplastische Harzzusammensetzung nach einem der Ansprüche 1 bis 3, worin die ungesättigte Carbonsäure oder deren Anhydrid Maleinsäureanhydrid ist.

5. Thermoplastische Harzzusammensetzung nach einem der Ansprüche 1 bis 4, worin das epoxygruppenhaltige, aromatische Vinylpolymer Styrol-Glycidylmethacrylat-Copolymer ist.

6. Thermoplastische Harzzusammensetzung nach einem der Ansprüche 1 bis 4, worin das epoxygruppenhaltige, aromatische Vinylpolymer Styrol-Acrylnitril-Glycidylmethacrylat-Copolymer ist.

7. Thermoplastische Harzzusammensetzung nach einem der Ansprüche 1 bis 6, worin der Mischungsanteil der Komponente (A) mit der Komponente (B) 35 bis 80 Gew.%: 65 bis 20 Gew.% ist.

**Revendications**

1. Composition de résine thermoplastique pouvant être obtenue par malaxage en masse fondue d'un constituant (A) suivant 20 à 95 % en poids, d'un constituant (B) suivant 80 à 5 % en poids et d'une charge fibreuse suivant 5 à 150 parties en poids par rapport à 100 parties en poids du poids total dudit constituant (A) et dudit constituant (B), dans laquelle :

   (A) est une polyoléfine modifiée obtenue en faisant réagir par greffe une polyoléfine avec un acide carboxylique insaturé ou son anhydride, seule ou un mélange de ladite polyoléfine modifiée avec une polyoléfine, la teneur du groupe fonctionnel dudit acide carboxylique insaturé ou de son anhydride étant 3 à 1 000 mmoles/kg et son débit en masse fondue (MFR) à 230°C sous une charge de 2,16 kg étant 1 à 200 g/10 mn, et

   (B) est un polymère de vinyle aromatique contenant un groupe époxy, ayant une teneur du groupe époxy de 50 à 1 000 mmoles/kg, seul ou un mélange dudit polymère de vinyle aromatique contenant un groupe époxy avec un polymère de vinyle aromatique ne contenant aucun groupe époxy, la teneur du groupe époxy dans l'ensemble dudit constituant (B) étant 50 à 1 000 mmoles/kg et le débit en masse fondue (MFR) à 230°C sous une charge de 2,16 kg étant 15 à 200 g/10 mn.

2. Composition de résine thermoplastique selon la revendication 1, dans laquelle ladite polyoléfine est un polypropylène.

3. Composition de résine thermoplastique selon la revendication 1, dans laquelle ladite polyoléfine est un copolymère cristallin de propylène comme constituant principal avec de l'éthylène et/ou une autre oléfine.

4. Composition de résine thermoplastique selon l'une quelconque des revendications 1 à 3, dans laquelle ledit acide carboxylique insaturé ou son anhydride est l'anhydride maléique.

5. Composition de résine thermoplastique selon l'une quelconque des revendications 1 à 4, dans laquelle ledit polymère de vinyle aromatique contenant un groupe époxy est un copolymère de styrène-méthacrylate de glycidyle.

6. Composition de résine thermoplastique selon l'une quelconque des revendications 1 à 4, dans laquelle ledit polymère de vinyle aromatique contenant un groupe époxy est un copolymère de styrène-acrylonitrile-méthacrylate de glycidyle.

7. Composition de résine thermoplastique selon l'une quelconque des revendications 1 à 6, dans laquelle la proportion de mélange dudit constituant (A) et dudit constituant (B) est 35 à 80 % en poids : 65 à 20 % en poids.